# EUROPEAN PATENT APPLICATION

(11) **EP 4 746 341 A1**
(43) Date of publication of application: **20.05.2026**
(21) Application number: 25192405.6
(22) Date of filing: 29.07.2025
(51) Int. Cl.: H04L 9/08

(54) **CXL DEVICE AND OPERATING METHOD THEREOF FOR PROTECTING DATA USING MEMORY ENCRYPTION**

(30) Priority: 15.11.2024 KR 20240163368
(71) Applicant: Samsung Electronics Co., Ltd., Suwon-si, Gyeonggi-do 16677 (KR)
(72) Inventor: LEE, Yongjae, 16677 Suwon-si (KR); KIM, Kyoungbum, 16677 Suwon-si (KR); BAE, Mungyu, 16677 Suwon-si (KR); LEE, Sukkyu, 16677 Suwon-si (KR); CHO, Wonhee, 16677 Suwon-si (KR); KIM, Jisoo, 16677 Suwon-si (KR); CHU, Younsung, 16677 Suwon-si (KR)
(74) Representative: Marks & Clerk LLP

(57) **Abstract**

The present disclosure relates to a Compute Express Link (CXL) device configured to protect data by using data encryption, and an operating method thereof. An example CXL device includes a volatile memory and a CXL controller. The CXL controller receives first host data and a first host physical address from a first host device, converts the first host physical address into a first device physical address, obtains a first key index, based on a key index table, the first host data, and the first device physical address, obtains at least one first key, based on a key table and the first key index, and performs an encryption operation, based on the at least one first key and an encryption algorithm.

## Description

### BACKGROUND

The development of technologies such as Artificial Intelligence (AI), big data, and Edge Computing demands rapid processing and storing of a great amount of data in devices. High bandwidth applications configured to execute complicated computing require more rapid data processing and more efficient memory access. To this end, research and development has been conducted on Compute Express Link (CXL) devices, i.e., electronic devices configured to support CXL.

CXL devices, based on CXL interfaces, connect various processors and devices and provide flexible expansion of memory capacities and optimized memory management. Such CXL devices should comply with the terms defined in CXL standard, and numerous members update the contents of the CXL standard through meetings. CXL devices may improve the efficiency in the management of data centers in existing server systems with minimal costs. In addition, CLX controllers in CXL devices secure stable data management environments by providing improved reliability and enhanced security.

### SUMMARY

The present disclosure relates to a Compute Express Link (CXL) device and an operating method thereof to support various types of memory encryption and protect data by using memory encryption in all CXL environments.

The CXL standard provides a memory encryption function to protect data. In related art, target-based memory encryption is supported as one of the memory encryption methods according to the CXL standard. The target-based memory encryption is a sub-function that is subject to functions of Trusted Execution Environment (TEE) Security Protocol (TSP). Therefore, the target-based memory encryption cannot be performed without the functions of TSP. In addition, the target-based memory encryption is not supported in a Multi Logical Device (MLD) environment or memory sharing. Furthermore, a host device is configured to designate a key and a key index used for the target-based memory encryption and manage the key index.

In some implementations, a CXL device includes a volatile memory and a CXL controller configured to communicate with a plurality of host devices and the volatile memory. The CXL controller is further configured to receive first host data and a first host physical address from a first host device among the plurality of host devices, convert the first host physical address into a first device physical address for the volatile memory, obtain a first key index set for the first host device, based on at least one key index table for the key index, the first host data, and the first device physical address, obtain at least one first key set for the first host device, based on a key table for the at least one key for each of a plurality of key indices of the at least one key index table and the first key index, and perform an encryption operation, based on the at least one first key and an encryption algorithm.

In some implementations, a CXL device includes a volatile memory and a CXL controller configured to communicate with each of a first host device and the volatile memory. The CXL controller is further configured to receive first host data and a first host physical address from the first host device, allocate a first device physical address corresponding to the first host physical address, generate at least one first key corresponding to the first device physical address, store a first key index corresponding to the at least one first key, the first host data, and the first device physical address in at least one key index table for a key index, and store the first key index and the at least one key in a key table for at least one key set for each of a plurality of key indices of the at least one key index table.

In some implementations, an operating method of a Compute Express Link (CXL) device, including a volatile memory and a CXL controller, includes receiving first host data and a first host physical address from a first host device among a plurality of host devices, allocating a first device physical address corresponding to the first host physical address, generating at least one key corresponding to the first device physical address, storing a first key index, the first host data, and the first device physical address, which correspond to the at least one first key, in at least one key index table for a key index; and storing the first key index and the at least one first key in a key table for at least one key corresponding to the key index.

In one implementation, the operating method of the CXL device, wherein allocating the first device physical address corresponding to the first host physical address comprises decoding the first host physical address into the first device physical address based on an address mapping table.

At least some of the above and other features of the invention are set out in the claims.

### BRIEF DESCRIPTION OF THE DRAWINGS

Implementations will be more clearly understood from the following detailed description taken in conjunction with the accompanying drawings.
FIG. 1 is a block diagram illustrating an example of a Compute Express Link (CXL) system.
FIG. 2 is a block diagram illustrating an example of a CXL fabric system.
FIG. 3 is a block diagram of an example of a crypto controller.
FIG. 4 is a diagram illustrating an example of a single key index table.
FIG. 5 is a diagram illustrating an example of a plurality of key index tables.
FIG. 6 is a diagram illustrating an example of a key table.
FIG. 7 is a flowchart for describing an example of a method of setting a new key.
FIG. 8 is a diagram for describing an example of setting a key used for Context Key Identifier (CKID)-based memory encryption.
FIG. 9 is a diagram for describing an example of setting a key used for range-based memory encryption.
FIG. 10 is a diagram for describing an example of setting a key used for device physical address-based memory encryption.
FIG. 11 is a flowchart for describing an example of a method of storing encrypted data.
FIG. 12 is a diagram for describing an example of encrypting data by using CKID-based memory encryption.
FIG. 13 is a diagram for describing an example in which data is encrypted by using range-based memory encryption.
FIG. 14 is a diagram for describing an example in which data is encrypted by using device physical address-based memory encryption.
FIG. 15 is a flowchart for describing an example of a method of providing decrypted data.

### DETAILED DESCRIPTION

Hereinafter, implementations will be described in detail with reference to the accompanying drawings.

Terms used in the present specification are intended to only describe some example implementations, and are not construed to limit the claimed subject matters. As used in the present specification, singular forms "a," an," and "the" are intended to encompass plural forms, unless explicitly intended otherwise in the context.

Terms such as "first" and "second" used herein are used as labels followed by nouns, and unless explicitly defined like this, do not indicate certain types of orders (e.g., spatial orders, temporal orders, logical orders, and the like). For example, a first component and a second component may respectively indicate different components, regardless of orders or importance. For example, without departing from the scope written in the present specification, the first component may be named as the second component, and similarly, the second component may also be named as the first component.

As used herein, "module" indicates an arbitrary combination of software, firmware, and/or hardware configured to provide functions described in the present specification regarding the module. For example, software may be implemented as a software package, code, and/or an instruction set or an instruction, and the term "hardware" used in arbitrary implementations described in the specification may include, for example, an assembly, a wired circuit, a programmable circuit, a Finite State Machine (FSM) and/or firmware configured to store instructions executed by the programmable circuit, separately or in arbitrary combinations. Collectively or individually, a module may be implemented as a circuit that is a part of a greater system, e.g., an integrated circuit (IC), a System-On-Chip (SoC), an assembly, and the like.

Terms such as "comprises" and/or "comprising" used herein specify the existence of features, integers, procedures, processes, operations, elements, and/or components specified herein, but are not to preclude the existence or addition of one or more other features, integers, processes, operations, elements, and/or groups thereof.

When an element is referred to as "being on," "connected to," or "coupled to," and "responsive or in response to" another element, the element may be directly on, connected to, coupled to, or responsive or in response to the other element, or an interleaving element may be therebetween. On the other hand, when an element is referred to as being "directly on," "directly connected to," "directly coupled to," and "directly responsive to" another element, there may be no interleaving element therebetween. As used herein, the term "and/or" includes one or more arbitrary and any combinations of related items listed herein. Furthermore, the symbol "/" (e.g., when used as in the term "source/drain" will be understood to be equivalent to the term "and/or".

Throughout the specification, the mention about "one implementation" or "an implementation" indicates that specific features, structures, or characteristics described with reference to the implementations may be included in at least one implementation disclosed herein.

Furthermore, it is to be further stated that various figures (including component diagrams) in the present disclosure are only used to provide examples and are not illustrated according to scales. For example, sizes of some of the elements may be exaggerated than other elements for clarity.

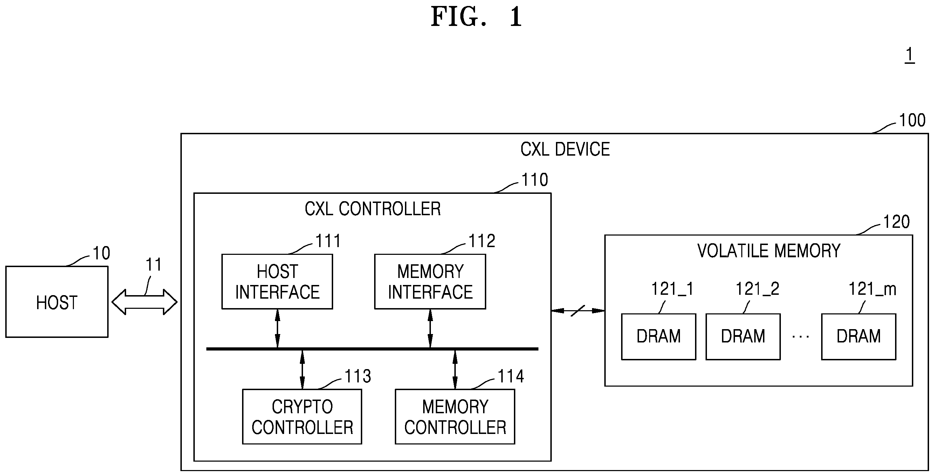

FIG. 1 is a block diagram illustrating an example of a Compute Express Link (CXL) system 1.

Referring to FIG. 1, the CXL system 1 may include a combination of electronic devices configured to support CXL protocol. The electronic devices included in the CXL system 1 may communicate with each other by using the CXL protocol.

CXL, which is an open industry-supported protocol for communication based on Peripheral Component Interconnect Express (PCIe) 5.0, may provide a packet size that is fixed and relatively shorter, and as a result thereof, may provide a relatively higher bandwidth and a fixed latency that is relatively shorter. Like this, the CXL may support cache coherence, and may be greatly suitable for generating connections to memory devices. The CXL may also be used to provide connection (i.e., fabric) between a host, an accelerator, memory devices, and network interface circuits (or network interface controllers or network interface cards (NIC)) in a server. A CXL transaction layer may include three multiplex sub-protocols simultaneously operated on a single link, and the sub-protocols may be referred to as CXL.io, CXL.cache, and CXL.memory. The CXL.io includes input/output (I/O) semantics that may be similar to PCIe, and is used for searching for devices, managing interrupts, providing access by a register, initialization process, signal error process, and the like. The CXL.cache includes caching semantics, and may be used when an operation device such as an accelerator accesses a host memory of a host device. The CXL.memory includes memory semantics, and may be used when the host device accesses a device memory included in a semiconductor device. Both the caching semantics and the memory semantics may be options.

The CXL system 1 may include a host 10 and a CXL device 100. The host 10 and the CXL device 100 may be connected to each other through various connection methods related to the CXL. For example, a method of connecting the host 10 and the CXL device 100 to each other may include directed attaching, memory pooling, memory sharing, and/or memory fabric. Directed attaching is a method of connecting a host device and a memory to each other one-to-one through a memory expander. Memory pooling is a method of connecting a plurality of host devices to a plurality of memory pools through a memory expander and then dynamically connecting a memory block of each of the memory pools, which has a fixed size, to each of the host devices. Memory sharing is a method of connecting a plurality of host devices with a plurality of memory pools through a memory expander, dynamically assigning a memory block of each of the memory pools, which has a fixed size, to a host device, and then assigning a sharable block to allow access from different host devices. Memory fabric, i.e., a combination of memory pooling and memory sharing, is a method of simultaneously connecting different host devices with memory pools through a plurality of CXL switches.

The host 10 may be configured to process data, like a central processing unit (CPU), an application processor (AP), a System-On-a-Chip (SoC), and the like. The host 10 may be configured to execute an operating system (OS) and/or various applications. The host 10 may be connected to a host memory. The host 10 may be connected to the CXL device 100 through a CXL interface 11. The CXL interface 11 may include three types of sub-protocols, e.g., CXL.io, CXL.cache, and CXL.mem. The host 10 may be referred to as a CXL host, a host device, and the like.

In some implementations, the host 10 may be configured to communicate with the CXL device 100 by using the CXL.io and the CXL.mem. In this case, the CXL device 100 may be implemented as a memory expander that is a CXL Type 3 device.

In some implementations, the host 10 may be configured to transmit a CXL packet (or a CXL transaction) for accessing the CXL device 100, through the CXL interface 11. For example, the host 10 may be configured to provide a host physical address and a data write request to the CXL device 100, and the CXL device 100 may be configured to store data in a storage region having a device physical address that is mapped to the host physical address. For example, the host 10 may be configured to provide a read request, which includes the host physical address, to the CXL device 100, and the CXL device 100 may be configured to read the stored data and provide the read data to the host 10.

In some implementations, sub-protocols of the CXL interface 11 may include protocols according to the version 3.1 CXL standard or above.

The CXL device 100 may include a CXL controller 110 and a volatile memory 120.

The CXL controller 110 may include an Application Specific Integrated Circuit (ASIC) and/or an Intellectual Property (IP) circuit designed for implementation of a Field-Programmable Gate Array (FPGA).

In some implementations, the CXL controller 110 may include a host interface 111, a memory interface 112, a crypto controller 113, and a memory controller 114. The host interface 111, the memory interface 112, the crypto controller 113, and the memory controller 114 may transmit/receive data through a bus.

The host interface 111 may be configured to provide interface functions between the host 10 and the CXL device 100. The host interface 111 may be configured to receive a CXL packet provided from the host 10. The host interface 111 may be configured to provide data, which is read from the volatile memory 120, to the host 10.

The memory interface 112 may be configured to provide interface functions between the CXL controller 110 and the volatile memory 120. For example, the memory interface 112 may be configured to provide interfaces between the memory controller 114 and a plurality of Dynamic Random Access Memories (DRAMs) 121_1 to 121_m of the volatile memory 120.

The crypto controller 113 may be configured to set at least one key (i.e., a cryptographic key) used for encrypting the data or decrypting the encrypted data. For example, when the host 10 and the CXL device 100 are connected to each other, negotiation regarding the CXL protocol between the host 10 and the CXL device 100 may be conducted, and during the negotiation, the crypto controller 113 may generate one or more keys corresponding to newly allocated storage regions in a storage region of the CXL device 100, in response to a memory assignment request from the host 10, and store the one or more keys in the storage region of the CXL device 100.

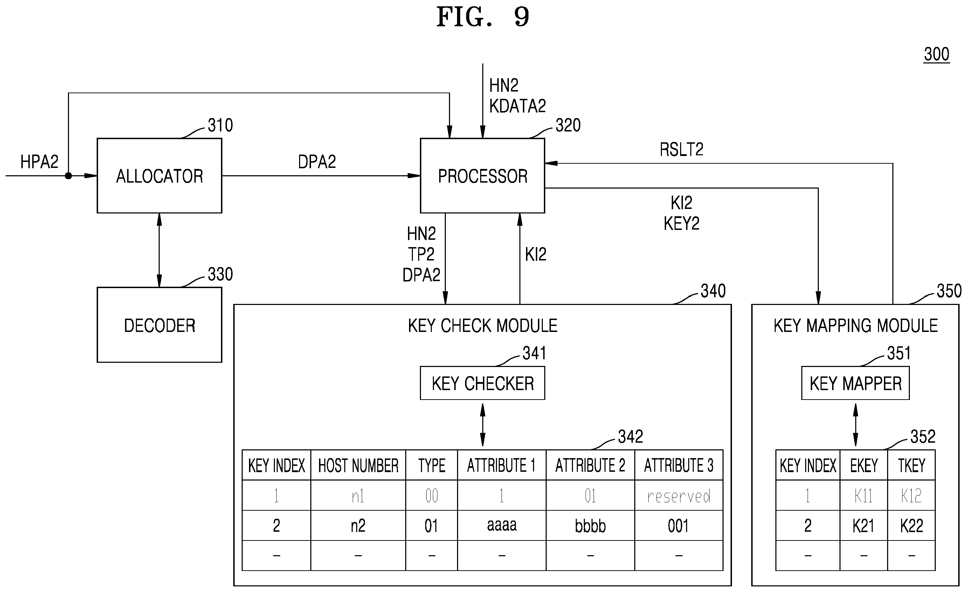

In some implementations, the crypto controller 113 may be configured to set at least one key used for target-based memory encryption. The target-based memory encryption, which is a memory encryption method defined by the CXL standard, implements encryption by using one of Memory Encryption Algorithms Supported in a Get Target Capabilities Response. Trusted Execution Environment (TEE) Security Protocol (TSP) supports two types of target-based memory encryption. For example, the target-based memory encryption may include Context Key Identifier (CKID)-based memory encryption and range-based memory encryption. CKID may include information delivered from a protocol fleet for identifying security keys used for memory encryption performed by using the TSP of the CXL standard. The CKID-based memory encryption requires use of a CKID field in a transaction layer to identify particular keys used for encryption/decryption of memory contents for given transactions. The range-based memory encryption uses memory-range registers configured to associate particular encryption keys to particular memory ranges, and is not dependent on a CKID field in the transaction. The range-based memory encryption in the present disclosure may also be referred to as host physical address-based memory encryption. The host may be configured to enable the CKID-based memory encryption or the range-based memory encryption, but is not allowed to enable both of the CKID-based memory encryption and the range-based memory encryption. An implementation of generating a key related to the target-based memory encryption is described below with reference to FIG. 9.

For the target-based memory encryption, it is required that the host device designates the key and key indices used for memory encryption and manage the key indices. For example, when the CKID-based memory encryption is used in the host device, the host device designates and manages a separate key index, i.e., CKID, and a key matching the key index. For example, when the CKID-based memory encryption is used in the host device, the host device designates and manages a key for each host physical address.

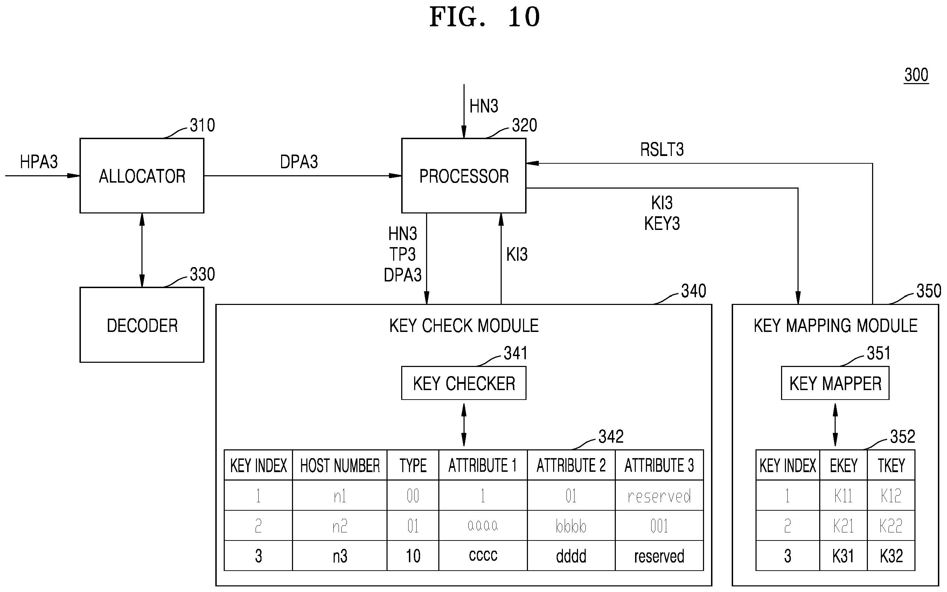

In some implementations, the crypto controller 113 may be configured to set at least one key used for the device physical address-based memory encryption. The device physical address-based memory encryption may be a method of memory encryption based on the device physical address corresponding to the storage region of the CXL device 100. A storage region having a particular device physical address may correspond to, for example, a physical space in at least one of the plurality of DRAMs 121_1 to 121_m. An implementation of generating the key related to the device physical address-based memory encryption is described below with reference to FIG. 10.

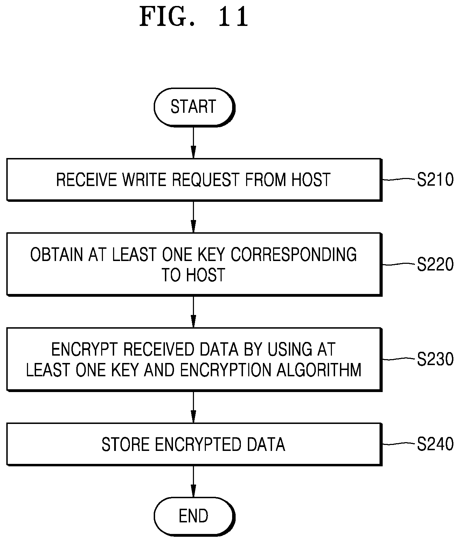

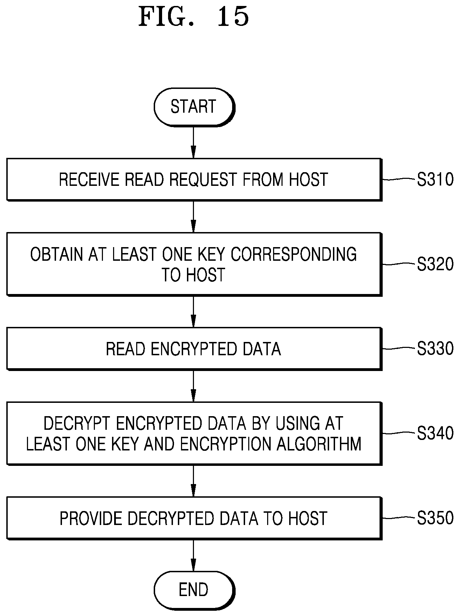

The crypto controller 113 may be configured to encrypt the data by using at least one key and memory encryption. The encrypted data may be provided to the memory controller 114. The crypto controller 113 may be configured to decrypt the encrypted data, which has been provided from the memory controller 114, by using the at least one key and memory encryption. The decrypted data may be provided to the host 10 through the host interface 111. Example implementations of encrypting the data are described below with reference to FIGS. 11 to 14, and some implementations of decrypting the encrypted data are described below with reference to FIG. 15.

The memory controller 114 may be configured to provide a write command, which instructs to store the encrypted data, and the device physical address to the volatile memory 120 through the memory interface 112. For example, the memory controller 114 may be configured to receive the device physical address and the encrypted data from the crypto controller 113 and provide the write command and the device physical address to the volatile memory 120.

The memory controller 114 may be configured to provide a read command, which instructs to read the encrypted data, and the device physical address to the volatile memory 120 through the memory interface 112. The memory controller 114 may be configured to, through the memory interface 112, receive the encrypted data from the volatile memory 120 and provide the encrypted data to the crypto controller 113.

In some implementations, some of operations of the crypto controller 113 may be performed by the memory controller 114. For example, an operation of obtaining a key index may be performed by the crypto controller 113, and an operation of obtaining at least one key and an operation of performing memory encryption by using the at least one key may be performed by the memory controller 114.

The volatile memory 120 may include the plurality of DRAMs 121_1 to 121_m. m may include an integer of 2 or greater. The volatile memory 120 may be configured to communicate with the CXL controller 110 through a plurality of channels and operate in an interleaving method through the plurality of channels. For example, some of the plurality of DRAMs 121_1 to 121_m may be configured to communicate with the CXL controller 110 through one channel. The other of the plurality of DRAMs 121_1 to 121_m may be configured to communicate with the CXL controller 110 through another channel.

Although not shown, the CXL device 100 may further include a nonvolatile memory including a NOT-AND (NAND) flash and the like.

According to the implementations described above, a target device (e.g., the CXL device 100) allocates and manages a key to be used for memory encryption, based on a device physical address thereof, and thus may support memory encryption for all of storage regions of the volatile memory 120 without an overlapping or empty portion.

In addition, according to the implementations described above, as the target device allocates and manages keys without being dependent on the host devices, in terms of the host device, general data read operations or data write operations may be performed, therefore, even in the memory-pooling environment and the memory sharing environment (e.g., a shared memory such as LD-FAM and G-FAM), the memory encryption may be supported, and the performance of the system may be improved.

Furthermore, according to the implementations described above, as the crypto controller 13 performs both of the encryption/decryption operations, compared with implementations in which encryption/decryption operations are separately performed by the crypto controller 113 and the memory controller 114, the security will be further enhanced.

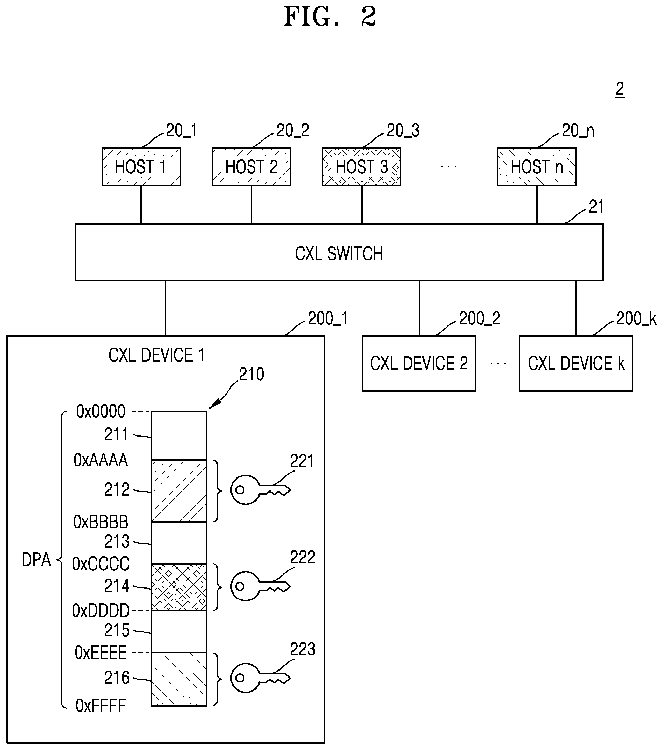

FIG. 2 is a block diagram illustrating an example of a CXL fabric system 2.

Referring to FIG. 2, the CXL fabric system 2 may include a system sharing information between devices, providing a memory sharing function, and providing a memory-pool function, through fabric networking of CXL standard 3.0 and above. The CXL fabric system 2 may include a plurality of hosts 20_1 to 20_n, a CXL switch 21, and a plurality of CXL devices 200_1 to 200_k (i.e., a first CXL device 200_1 to a kth CXL device 200_k). n and k may each include an integer of 2 or greater.

Each of the plurality of hosts 20_1 to 20_n may be configured to perform the operation of the host 10 shown in FIG. 1.

The CXL switch 21 may be configured to mediate communication between the plurality of hosts 20_1 to 20_n and the plurality of CXL devices 200_1 to 200_k. For example, the CXL switch 21 may be configured to deliver information, e.g., a request, data, a response, or signal delivered from each host and each CXL device, to each host and each CXL device. The CXL switch 21 may be used for implementing a group memory that facilitates one-to-many and many-to-one switching in a state where the group of devices is divided into a plurality of logical devices each having a logic device (LD)-identifier (ID). For example, the CXL switch 21 may (i) connect a plurality of root ports to an end point, (ii) connect one root port to a plurality of end points, or (iii) connect a plurality of root points to a plurality of end points. The CXL switch 21 may include a plurality of I/O ports connected to the fabric. Each of the plurality of I/O ports of the CXL switch 21 may be configured to support a CXL interface and implement the CXL protocol.

Each of the plurality of CXL devices 200_1 to 200_k may be configured to perform the operation of the CXL device 100 shown in FIG. 1 and include the components included in the CXL device 100 shown in FIG. 1. In some implementations, the plurality of CXL devices 200_1 to 200_k may be configured to provide memory sharing and memory pooling.

The plurality of CXL devices 200_1 to 200_k may each include a storage region. For example, the first CXL device 200_1 may include a storage region 210. Sub-regions of the storage region 210 may be divided into certain ranges by using values 0x0000 to 0xFFFF of a device physical address DPA. References for dividing the ranges may be variously set, for example, a minimum storage region unit allocated to each host, a memory pooling unit, a memory sharing unit, a preset unit, and the like. For example, sizes of address ranges 211 to 216 may be identical to or different from one another, and may be adjusted for supporting dynamic capacity. As the host physical address is an address independently used by each host, values of the host physical addresses may overlap between the hosts. However, as the device physical address (DPA) is an inherent address of each CXL device, values of the DPA for one CXL device may not overlap between the hosts.

In some implementations, at least some of the plurality of hosts 20_1 to 20_n may share storage regions of the plurality of CXL devices 200_1 to 200_k according to memory sharing between the plurality of CXL devices 200_1 to 200_k. For example, a first host 20_1 and a second host 20_2 may be allocated with the address range 212 in the storage region 210 of the first CXL device 200_1 and share the address range 212 with each other. In the storage region 210 of the first CXL device 200_1, the address range 212 may correspond to values 0xAAAA to 0xBBBB of the device physical address DPA. In this case, "0xAAAA" may include an initial value of the device physical value DPA corresponding to the address range 212, and "0xBBBB" may include a final value of the device physical address DPA corresponding to the address range 212. The first CXL device 200_1 may be configured to allocate the address range 212 to the first host 20_1 and the second host 20_2 and set at least one key 221 corresponding to the address range 212. The at least one key 221 may be used for encrypting data to be stored in the address range 212 or decrypting the encrypted data that is stored in the address range 212.

In some implementations, at least some of the plurality of hosts 20_1 to 20_n may be allocated with the storage regions of the plurality of CXL devices 200_1 to 200_k according to memory pooling of the plurality of CXL devices 200_1 to 200_k. For example, a third host 20_3 may be allocated with an address range 214 in the storage region 210 of the first CXL device 200_1. In the storage region 210 of the first CXL device 200_1, the address range 214 may correspond to values 0xCCCC to 0xDDDD of the device physical address DPA. In this case, "0xCCCC" may include an initial value of the device physical value DPA corresponding to the address range 214, and "0xDDDD" may include a final value of the device physical value DPA corresponding to the address range 214. For example, an n^{th} host 20_n may be allocated with an address range 216 in the storage region 210 of the first CXL device 200_1. The address range 216 may correspond to values 0xEEEE to 0xFFFF of the device physical address DPA. The first CXL device 200_1 may be configured to assign the address ranges 214 and 216 to the third host 20_3 and the n^{th} host 20_3, respectively, and set keys 223 and 224 respectively corresponding to the address ranges 214 and 216.

For example, in the storage region 210 of the first CXL device 200_1, the address ranges 211, 213, and 215 may include unallocated regions, that is, allocation-released regions. Keys used for memory encryption may have not been set for the address ranges 211, 213, and 215 that have been allocation-released. When at least one of the plurality of hosts 20_1 to 20_n designates an allocation size and sends an allocation request, the first CXL device 200_1 may allocate some regions (e.g., specific address regions) of the address ranges 211, 213, and 215 that have been allocation-released, according to the allocation size, and may set at least one key corresponding to the some regions that have been allocated.

Some of the CXL devices 200_2 to 200_k may also allocate storage regions in response to the allocation request from the host, and may set at least one key corresponding to the allocated region. Accordingly, a key may be allocated to each of the address ranges of the CXL device currently used by each of the plurality of hosts 20_1 to 20_n, and the keys are not allocated to unallocated address ranges.

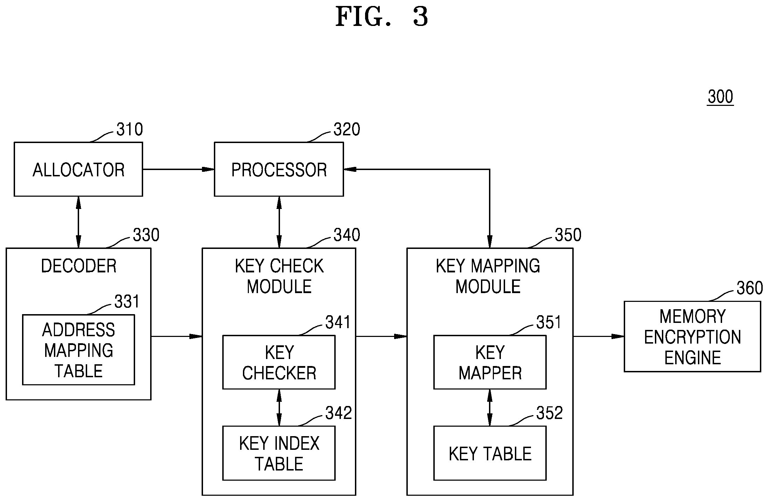

FIG. 3 is a block diagram of an example of a crypto controller 300.

Referring to FIG. 3, the crypto controller 300, which is a physical and/or logical sub-system configured to process CXL packets, may include an allocator 310, a processor 320, a decoder 330, a key check module 340, a key mapping module 350, and a memory encryption engine 360.

The allocator 310 may receive an unallocated (that is, allocation-released) device physical address DPA from the decoder 330, in response to an allocation request of a host (e.g., the host 10 in FIG. 1 and/or any one of the plurality of hosts 20_1 to 20_n in FIG. 2). In some implementations, the allocation request may include an initial value of the host physical address and the size of the host physical address. In some implementations, the allocation request may include the initial value and a final value of the host physical address. The allocator 310 may map the host physical address, which is currently received, to the received device physical address DPA, and may update an address mapping table 331 by storing a result of the mapping into the address mapping table 331 of the decoder 330. The allocator 310 may provide a device physical address DPA, which is newly allocated, to the processor 320.

The processor 320 may generate at least one new key based on the device physical address DPA received from the allocator 310. The number of keys to be generated may be determined according to type of an encryption algorithm. For example, when an encryption algorithm is Advanced Encryption Standard (AES)-XTS, the processor 320 may generate a data encryption key (EKey) and a tweak key (TKey) defined by an AES encryption algorithm standard. For example, when an encryption algorithm is AES-Galois/Counter Mode (GCM), the processor 320 may generate one key. However, the present disclosure is not limited to the aforementioned implementations.

The processor 320 may, after generating at least one key, receive a newly allocated key index from the key check module 340 by communicating with the key check module 340. The processor 320 may store the received key index and the generated at least one key to the key mapping module 350.

In some implementations, to generate an AES key, the processor 320 may include hardware/firmware modules such as True Random Number Generator (TRNG), Pseudo Random Number Generator (PRNG), and the like.

The decoder 330 may convert and decode the host physical address into the device physical address DPA. In some implementations, the decoder 330 may be implemented as a Host-managed Device Memory (HDM) decoder or a G(Global)-FAM (Fabric-Attached Memory) device) (GFD) decoder defined in the CXL standard. The decoder 330 may provide the device physical address DPA to the memory controller 114 in FIG. 1 and/or the key check module 340 in FIG. 3. In some implementations, the decoder 330 may include the address mapping table 331. The address mapping table 331 may include a table indicating a mapping relationship between the host physical address and the device physical address DPA. The address mapping table 331 may include a plurality of entries (or may be referred to as a plurality of slots), a value of the host physical address and a value of the device physical address DPA may be stored in each of some of the plurality of entries, and some of the plurality of entries may be empty.

The key check module 340 may be configured to provide a key index corresponding to input data, from among key indices stored in the key check module 340, to the processor 320 and/or the key mapping module 350.

In some implementations, the input data input to the key check module 340 may include host data. The host data may include information regarding a host that is to access the CXL device (e.g., the CXL device 100 in FIG. 1 and/or the CXL device selected from among the plurality of CXL devices 200_1 to 200_k in FIG. 2). For example, the host data may include a value of a host number. The host number may include a parameter for identifying a host that is to currently access (the CXL device). By using the host data, the key check module 340 may confirm the type of memory encryption supported and used by each host.

In some implementations, the input data input to the key check module 340 may further include various types of data for accessing the CXL device and identifying memory encryption supported by the host. In an example implementation, the key check module 340 may receive the initial value and the final value of the device physical address DPA as the input data. In an example implementation, the key check module 340 may receive an initial value and the final value of the host physical address as the input data. In an example implementation, the key check module 340 may receive the CKID data as the input data. The CKID data may include a CKID value and a value indicating the type of CKID.

In some implementations, the key check module 340 may include a key checker 341 and a key index table 342.

The key checker 341 may search for a corresponding key index from the key index table 342 by using various input data. Here, the corresponding key index may include a parameter for indexing at least one key used for memory encryption used by the host that is to be currently accessed. In some implementations, the method of searching for a key index may be variously implemented, e.g., linear search, binary search, and tree. When the host sends an allocation request, the key checker 341 may store the key index in an empty entry (or a slot) in the key index table by using various input data received from the processor, to thereby update the key index table 342.

The key index table 342 may be implemented as Static RAM (SRAM) and the like. The key index table 342 may include a plurality of entries, and in an entry, a value of a key index and values of attributes corresponding to the key index may be stored. There may be an empty entry among the plurality of entries of the key index table 342.

The key mapping module 350 may manage a key for each of the key indices stored in the key mapping module 350. For example, the key mapping module 350 may store at least one key generated by the processor 320, load key(s) corresponding to the received key index from among the keys stored in the key mapping module 350, and delete a corresponding key in response to allocation-release of the device physical address DPA. From among the keys, the key mapping module 350 may provide the key(s) corresponding to the received key index to the memory encryption engine 360.

In some implementations, the key mapping module 350 may include a key mapper 351 and a key table 352. The key mapper 351 may search for corresponding key(s) from the key table 352 by using the received key index. In some implementations, a method of searching for at least one corresponding key may be variously implemented, for example, linear search, binary search, and the like. The key mapper 351 may update the key table 352 by storing the received at least one key in the key table 352. The key table 352 may be implemented as SRAM and the like. The key table 352 may include a plurality of entries, and in an entry, a value of a key index and values of attributes corresponding to a key index may be stored. In some implementations, only the key checker 341 may access the key index table 342.

The memory encryption engine 360 may set at least one key received from the key mapping module 350, and may perform encryption/decryption operations by using the encryption algorithms, e.g., AES-XTS, AES-GCM, and the like, and the key that has been set. In some implementations, the memory encryption engine 360 may be implemented as an AES engine. The memory encryption engine 360 according to some implementations may include a first AES engine configured to encrypt data and a second AES engine configured to decrypt the data that has been encrypted.

In some implementations, the number of memory encryption engines 360 may be one. According to the implementations, resources may be reduced by performing the encryption/decryption operations with a single memory encryption engine 360 regardless of the number of channels between the CXL controller 110 and the volatile memory 120.

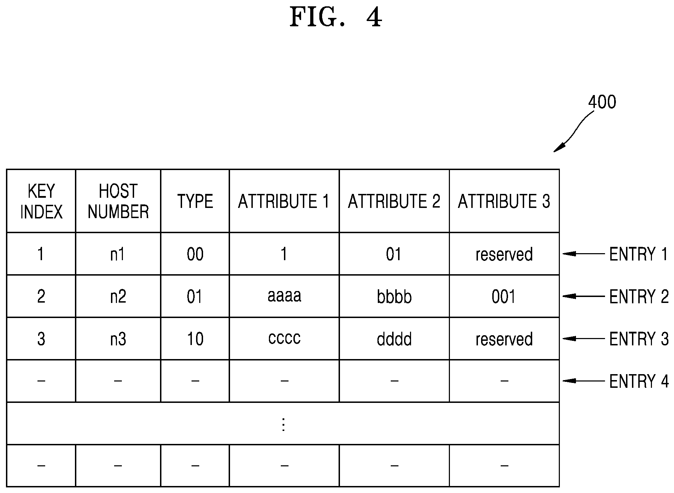

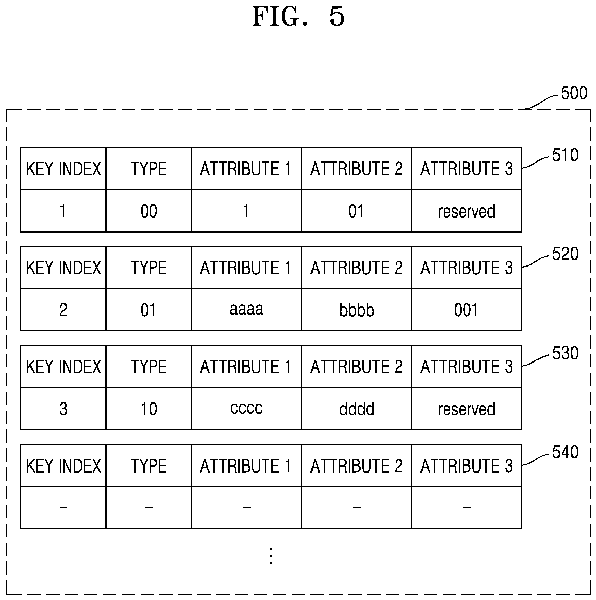

FIG. 4 is a diagram illustrating an example of a single key index table 400, and FIG. 5 is a diagram illustrating an example of a plurality of key index tables 500.

Referring to FIGS. 3 and 4, the key index table 342 of the key check module 340 may be implemented as the single key index table 400.

The single key index table 400 may store values of a plurality of key indices, values of host numbers, values of types of memory encryption, and values of attributes of the plurality of host devices.

Every time the address range of the device physical address DPA is allocated, a value of a new key index may be stored in the single key index table 400. In this case, a value of a key index newly stored may increase one by one.

The value of the host number may correspond to a value included in the received host data.

The type of memory encryption may indicate device physical address-based memory encryption, target-based memory encryption (e.g., CKID-based memory encryption and range-based memory encryption), or the like. For example, when a value of the type of memory encryption is "00", the value may indicate CKID-based memory encryption. For example, when a value of the type of memory encryption is "01", the value may indicate range-based memory encryption. For example, when a value of the type of memory encryption is "10", the value may indicate device physical address-based memory encryption. However, the present disclosure is not limited to the aforementioned implementations.

In some implementations, the number of attributes may vary according to the type of memory encryption. Attributes for CKID-based memory encryption indicates information regarding CKID, the number of attributes is two, attributes for range-based memory encryption indicates the host physical address, the number of the attribute is two or three, attributes for device physical address-based memory encryption indicates the device physical address DPA, and the number of attributes may be two. However, the present disclosure is not limited to the aforementioned implementations.

A value of an index, a value of a host number, a value of the type of memory encryption, and a value of at least an attribute may be stored in each of the entries of the single key index table 400. For example, values may be stored in a first entry ENTRY1 to a third entry ENTRY3, and a fourth entry ENTRY4 and entries thereafter may be empty, but the present disclosure is not limited thereto.

For example, in the first entry ENTRY1, a value of a key index may be "1", a value of a host number may be "n1", a value of the type of memory encryption may be "0", a value of a first attribute ATTRIBUTE1, which indicates a CKID value, may be "1", and a value of a second attribute ATTRIBUTE2, which indicates a value of CKID type, may be "01".

For example, in the second entry ENTRY2, a value of a key index may be "2", a value of a host number may be "n2", a value of the type of memory encryption may be "01", a value of a first attribute ATTRIBUTE1, which indicates the initial value of the host physical address, may be "aaaa", a value of a second attribute ATTRIBUTE2, which indicates the final value of the host physical address, may be "bbbb", and a value of a third attribute ATTRIBUTE3, which indicates a value of an identifier of a host that provides the host physical address, may be "001". In another example implementation, among attributes indicating the host physical address, the third attribute ATTRIBUTE3 may be reserved.

For example, in the third entry ENTRY3, a value of a key index may be "3", a value of a host number may be "n3", a value of the type of memory encryption may be "10", a value of a first attribute ATTRIBUTE1, which indicates the initial value of the device physical address DPA, may be "cccc", and a value of a second attribute ATTRIBUTE2, which indicates a final value of the device physical address DPA, may be "dddd".

According to the example implementation shown in FIG. 4, the present disclosure may be easily designed and implemented.

Referring to FIGS. 3 to 5, the key index table 342 of the key check module 340 may include the plurality of key index tables 500 respectively corresponding to a plurality of host devices (e.g., the plurality of hosts 20_1 to 20_n shown in FIG. 2).

Each of the plurality of key index tables 500 may store a value of a corresponding key index, a value of the corresponding type of memory encryption, and values of attributes for a corresponding host device. For example, a first key index table 510 to a third key index table 530 indicate an example of tables to which key indices are allocated, and a fourth key index table 540 indicates an example of an empty table. Example values included in the first key index table 510 to the third key index table 530 are as described above with reference to FIG. 4, and therefore, descriptions thereof will not be given.

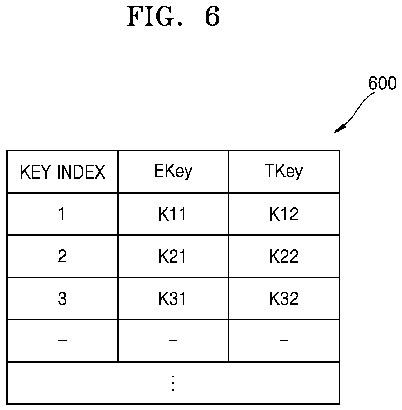

According to the example implementation illustrated in FIG. 6, a rate of searching tables may be improved.

FIG. 6 is a diagram illustrating an example of a key table 600.

Referring to FIG. 6, the key table 600 may include, for each of a plurality of key indices, a value of data encryption key (Ekey) defined in AES encryption algorithm protocol (e.g., K11, K21, or K31) and a value of a Tweak Key (Tkey) (e.g., K12, K22, or K32). The Ekey and the Tkey may be keys used in AES-XTS.

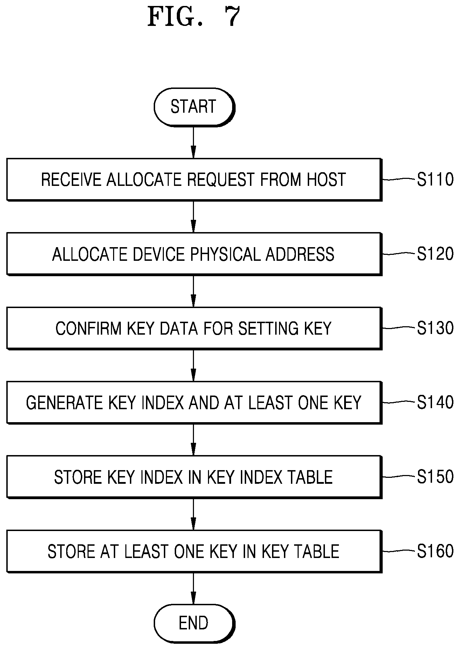

FIG. 7 is a flowchart for describing an example of a method of setting a new key.

Referring to FIGS. 1 and 7, in S110, the CXL controller 110 may receive an allocation request from the host 10 through the host interface 111.

In an example implementation, when the host 10 is to use device physical address-based memory encryption, the allocation request may include the host physical address and the host data.

In an example implementation, when the host 10 is to use target-based memory encryption, the allocation request may include the host physical address, the host data, key data, and attribute data. The key data may include a value for a key to be used by the host 10. For example, the key data may include a value indicating a key itself to be used by the host 10. For example, the key data may include a value of key entropy to be used by the CXL controller 110 for generating the key. The attribute data may include values of attributes of the host 10. For example, the attributes may include CKID and the type of CKID. For example, the attributes may include the range of host physical address.

In an example implementation, the CXL controller 110 may be configured to receive first host data and a first host physical address from a first host device.

In another example implementation, when keys for the first host device is allocated by the CXL controller 110, the CXL controller 110 may be configured to receive, from a second host device, second host data, second key data about a key to be used by the second host device, and second attribute data regarding attributes of the second host device.

In another example implementation, when keys for the first host device to the third host device are allocated by the CXL controller 110, the CXL controller 110 may be configured to receive fourth host data and a fourth host physical address from a fourth host device.

In S120, the CXL controller 110 may allocate the device physical address DPA mapped to the host physical address. For example, the CXL controller 110 may decode the host physical address into the device physical address, based on the address mapping table.

The CXL controller 110 according to an example implementation may be configured to allocate the first device physical address corresponding to the first host physical address.

The CXL controller 110 according to another example implementation may be configured to allocate the fourth device physical address corresponding to the fourth host physical address.

In S130, the controller 110 may confirm the key data. In some implementations, the key data may be not provided to the CXL device 100, and therefore, S130 may be omitted.

In S140, the CXL controller 110 may generate the key index and at least one key. The number of key indices to be generated is one, and the number of keys to be generated may be two in AES-XTS or one in AES-GCM.

The CXL controller 110 according to an example implementation may be configured to generate at least one first key and a first key index corresponding to the first device physical address.

The CXL controller 110 according to another example implementation may be configured to generate at least one second key and a second key index corresponding to the at least one second key, based on second key data.

The CXL controller 110 according to another implementation may be configured to generate at least one fourth key corresponding to the fourth device physical address.

In S150, the CXL controller 110 may store the key index in the key index table.

The CXL controller 110 according to an example implementation may be configured to store the first key index, first host data, and the first device physical address, which correspond to at least one first key, in at least one key index table for the key index.

The CXL controller 110 according to another example implementation may be configured to store the second key index, the second host data, and the second attribute data in the key index table.

The CXL controller 110 according to another example implementation may be configured to store a fourth key index, fourth host data, and the fourth device physical address, which correspond to the at least fourth key, in the key index table.

In S160, the CXL controller 110 may store the at least one key in the key table.

The CXL controller 110 according to an example implementation may be configured to store the first key index and the at least one first key in the key table for the at least one key.

The CXL controller 110 according to another example implementation may be configured to store the second key index and the at least one second key in the key table.

The CXL controller 110 according to another example implementation may be configured to store the fourth key index and the at least one fourth key in the key table.

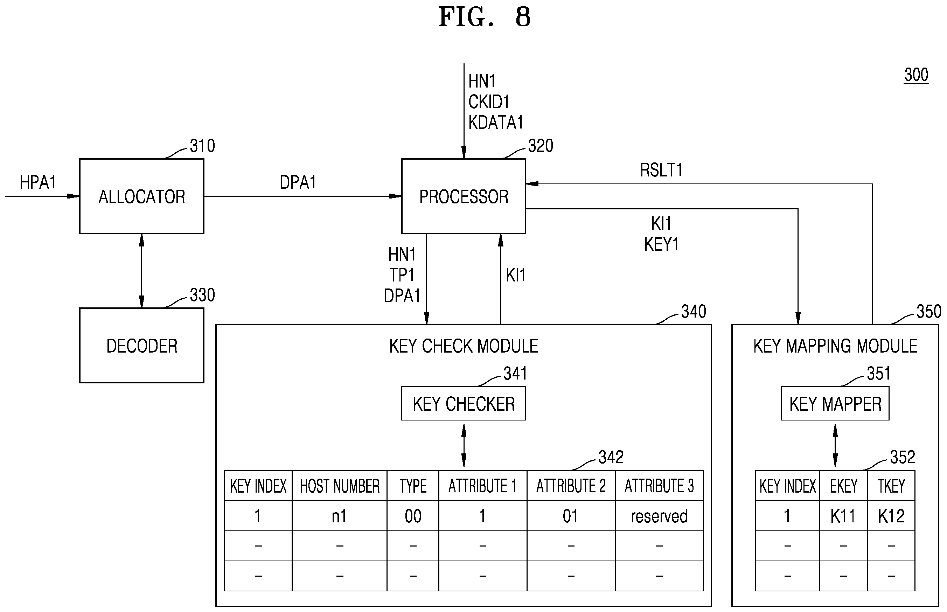

FIG. 8 is a diagram for describing an example of setting a key used for CKID-based memory encryption.

Referring to FIG. 8, the first host device may provide a first host physical address HPA1, first host data HN1, first CKID data CKID1, and first key data KDATA1 to the crypto controller 300 by using TSP. For example, the first host physical address HPA1 may include a range of an address including an initial value and a final value of the address. For example, the first host physical address HPA1 may include the initial value of the address and the size of the host physical address. The first host data HN1 may include a value of a host number for identifying the first host device. The first CKID data CKID1 may include values of CKID to be used by the first host device and the type of CKID. The first key data KDATA1 may include a value of the key to be used by the first host device. For example, the first key data KDATA1 may include the value of the key to be used by the first host device or a value of key entropy.

In some implementations, the first host device may provide the first CKID data CKID1 and the first key data KDATA1 to the crypto controller 300, in response to Security Protocol and Data Model (SPDM) commands defined in the CXL standards.

The allocator 310 may communicate with the decoder 330, to thereby allocate a first device physical address DPA1 to be mapped to the first host physical address HPA1 and provide the first device physical address DPA1 to the processor 320.

The processor 320 may receive the first device physical address DPA1, the first host data HN1, the first CKID data CKID1, and the first key data KDATA1, and may generate at least one first key KEY1 to be used by the first host device. The at least one first key KEY1 may include a first Ekey and a first Tkey. It is assumed that a value of the first Ekey is "K11" and a value of the first Tkey is "K12".

The processor 320, after confirming a value of the first host data HN1, may provide the first host data HN1, the first CKID data CKID1, and first type data TP1 to the key check module 340. A value of the first type data TP1, e.g., is "00", and it is assumed that the value indicates that CKID-based memory encryption is used in the first host device.

The key checker 341 of the key check module 340 may allocate the at least one first key KEY1 and a first key index KI1 corresponding to the at least one first key KEY1. The key checker 341 of the key check module 340 may store a value of the first key index KI1, the value of the first host data HN1, values of the first CKID data CKID1, and the value of the first type data TP1 in the key index table 342 of the key check module 340. The key index table 342 may return a result of the storing to the key checker 341. When the result that has been returned indicates success, the key checker 341 may provide the first key index KI1 to the processor 320.

The processor 320 may provide the at least one first key KEY1 and the first key index KI1 to the key mapping module 350.

The key mapper 351 of the key mapping module 350 may confirm whether there are errors in the at least one first key KEY1 and then store the first key index KI1 in the key table 352 of the key mapping module 350. The key table 352 may return a result of the storing to the key mapper 351, and a returned result RSTL1 may be delivered to the processor 320.

FIG. 9 is a diagram for describing an example of setting a key used for range-based memory encryption.

Referring to FIG. 9, the second host device may provide a second host physical address HPA2, second host data HN2, and second key data KDATA2 to the crypto controller 300 by using TSP. In some implementations, the second host device may provide the SPDM commands defined in the CXL standard to the crypto controller 300.

The allocator 310 may provide a second device physical address DPA2, which is mapped to the second host physical address HPA2, to the processor 320.

The processor 320 may receive the second host physical address HPA2, the second device physical address DPA2, the second host data HN2, and the second key data KDATA2, and may generate at least one second key KEY2 to be used by the second host device. It is assumed that a value of a second Ekey of the at least one second key KEY2 is "K21", and a value of a second Tkey of the at least one second Tkey KEY2 is "K22".

The processor 320, after confirming a value of the second host data HN2, may provide the second host data HN2, the second host physical address HPA2, and second type data TP2 to the key check module 340. A value of the second type data TP2, e.g., is "01", and it is assumed that the value indicates that range-based memory encryption is used in the second host device.

Like the description given above with reference to FIG. 8, the key check module 340 may allocate a second key index KI2 corresponding to the at least one second key KEY2, and may store a value of the second key index KI2, the value of second host data HN2, values of the second host physical address HPA2, and the value of the second type data TP2. The value of the second key index KI2, which has been returned, may be provided to the processor 320.

Similar to the description given above with reference to FIG. 8, the processor 320 may provide the at least one second key KEY2 and the second key index KI2 to the key mapping module 350, and the key mapping module 350 may store the value of the second key index KI2, a value of the second Ekey, and a value of the second Tkey. A returned result RSLT2 may be delivered to the processor 320.

FIG. 10 is a diagram for describing an example of setting a key used for device physical address-based memory encryption.

Referring to FIG. 10, the allocator 310 may convert a third host physical address HPA3, which has been received from the third host device, into a third device physical address DPA3. The processor 320 may receive the third device physical address DPA3 and third host data HN3, generate values (e.g., "K31" and "K32" shown in FIG. 10) of at least one third key KEY3 to be used by the third host device, confirm a value of third host data HN3, and then provide the third host data HN3, the third device physical address DPA3, and third type data TP3 to the key check module 340. A value of the third type data TP3, e.g., is "10", and it is assumed that the value indicates that device physical address-based memory encryption is used in the third host device.

Like in the descriptions given above with reference to FIGS. 8 and 9, the key check module 340 may store a value of a third key index KI3, a value of the third host data HN3, values of the third device physical address DPA3, and the value of the third type data TP3, which correspond to the at least one third key KEY3, and a value of the third key index KI3, which has been returned, may be provided to the processor 320. In addition, the key mapping module 350 may store the value of the third key index KI3 and values of the at least third key KEY3, which are provided from the processor 320, and a returned result RSLT3 may be delivered to the processor 320.

FIG. 11 is a flowchart for describing an example of a method of storing encrypted data.

Referring to FIGS. 1 and 11, in S210, the CXL device 100 may receive a write request from the host 10. In some implementations, the write request may include a host physical address, host data, and data. In an example implementation, the write request may further include CKID data.

In an example implementation, the CXL controller 110 may be configured to receive first host data and a first host physical address from a first host device.

In another example implementation, the CXL controller 110 may be configured to receive the CKID data, second host data, and a second host physical address from the second host device.

In another example implementation, the CXL controller 110 may be configured to receive third host data and a third host physical address from the third host device, by using TSP defined in the CXL standard.

In S220, the CXL device 100 may obtain at least one key corresponding to the host 10.

The CXL controller 110 according to an example implementation may be configured to convert the first host physical address into the first device physical address for the volatile memory 120. In addition, the CXL controller 110 may be configured to obtain the first key index set for the first host device, based on at least one key index table, the first host data, and the first device physical address. Furthermore, the CXL controller 110 may be configured to obtain the at least one first key set for the first host device, based on the key table for at least one key set for each of the plurality of key indices and the first key index.

The CXL controller 110 according to another implementation may be configured to obtain the second key index set for the second host device, based on at least one key index table, CKID data, and the second host data. In addition, the CXL controller 110 may be configured to obtain the at least one second key set for the second host device, based on the second key index and the key table.

The CXL controller 110 according to another example implementation may be configured to obtain the third key index set for the third host device, based on at least one key index table, the third host physical address, and the third host data. In addition, the CXL controller 110 may be configured to obtain at least one third key set for the third host device, based on the third key index and the key table.

In S220, the CXL device 100 may encrypt the data received from the host 10, by using at least one key and the encryption algorithm.

The CXL controller 110 according to an implementation may be configured to execute the encryption operation, based on the at least one first key and the encryption algorithm.

According to another example implementation, the CXL controller 110 may be configured to execute CKID-based memory encryption defined in the CXL standard, based on the at least one second key and the encryption algorithm.

According to another example implementation, the CXL controller 110 may be configured to perform range-based memory encryption defined in CXL standard, based on the at least one third key and the encryption algorithm.

In S240, the CXL device 100 may store encrypted data. For example, the crypto controller 113 may provide corresponding device physical addresses and the encrypted data to the memory controller 114, and the memory controller 114 may provide a write command, corresponding device physical addresses, and the encrypted data to the volatile memory 120.

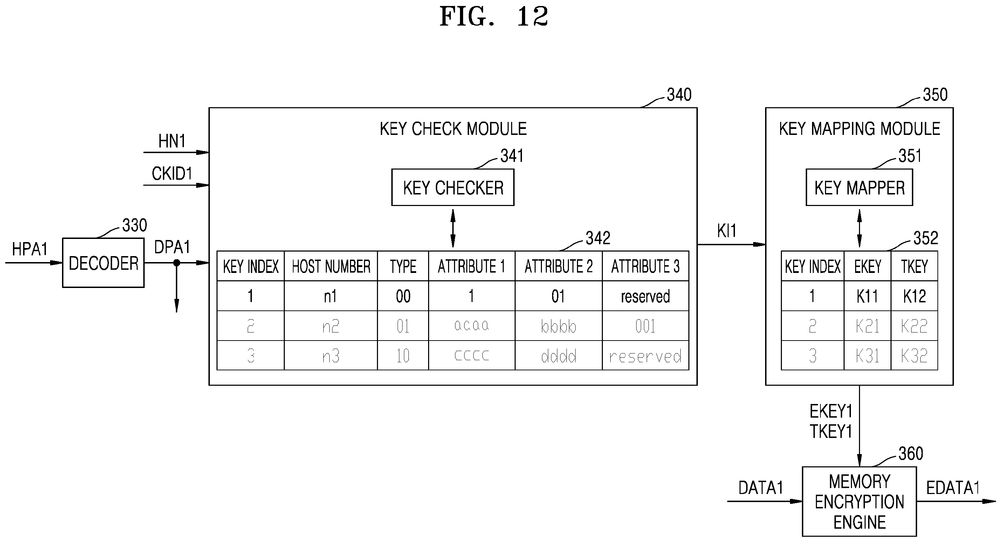

Hereinafter, various example implementations regarding FIG. 11 will be described with reference to FIGS. 12 to 14.

FIG. 12 is a diagram for describing an example in which data is encrypted by using CKID-based memory encryption.

Referring to FIG. 12, the first host device may output the write request according to the type of memory encryption to be used. In an example implementation, when the memory encryption used by the first host device includes the CKID-based memory encryption, the write request may include the first host physical address HPA1, the first host data HN1, and the first CKID data CKID1. In an example implementation, the first host physical address HPA1 may also be delivered to the key check module 340 through the host interface 111.

The decoder 330 may decode (for example, may be referred to as converting or mapping) the first host physical address HPA1 into the first device physical address DPA1.

The key check module 340 may receive the first device physical address DPA1, the first host data HN1, and the first CKID data CKID1. The key checker 341 of the key check module 340, after confirming the value of the first host data HN1 (e.g., the value of the host value), may search for a value of the first key index KI1 (e.g., "1") stored in the first entry of the key index table 342 of the key check module 340, by using the first host data HN1 and the first CKID data CKID1. After the key index table 342 returns the first key index KI1 to the key checker 341, the key checker 341 may provide the first key index KI1 to the key mapping module 350.

The key mapper 351 of the key mapping module 350 may search for values (e.g., "K11" and "K12") of the first keys (e.g., (EKEY1 and TKEY1) stored in the first entry of the key table 352 of the key mapping module 350, by using the value (e.g., "1") of the first key index KI1. After the key table 352 returns the first keys EKEY1 and TKEY1 to the key mapper 351, the key mapper 351 may provide the first keys (i.e., the first Ekey EKEY1 and the first Tkey TKEY1), to the memory encryption engine 360.

The memory encryption engine 360 may set the first keys, (i.e., the first Ekey EKEY1 and the first Tkey TKEY1) by queueing the received first keys EKEY1 and TKEY1 in a queue. In addition, the memory encryption engine 360 may encrypt the received first data DATA1 by using the first keys (i.e., the first Ekey EKEY1 and the first Tkey TKEY1) and the encryption algorithm (e.g., AES-XTS). The first device physical address DPA1 and first encrypted data EDATA1 may be provided to the memory controller 114 shown in FIG. 1.

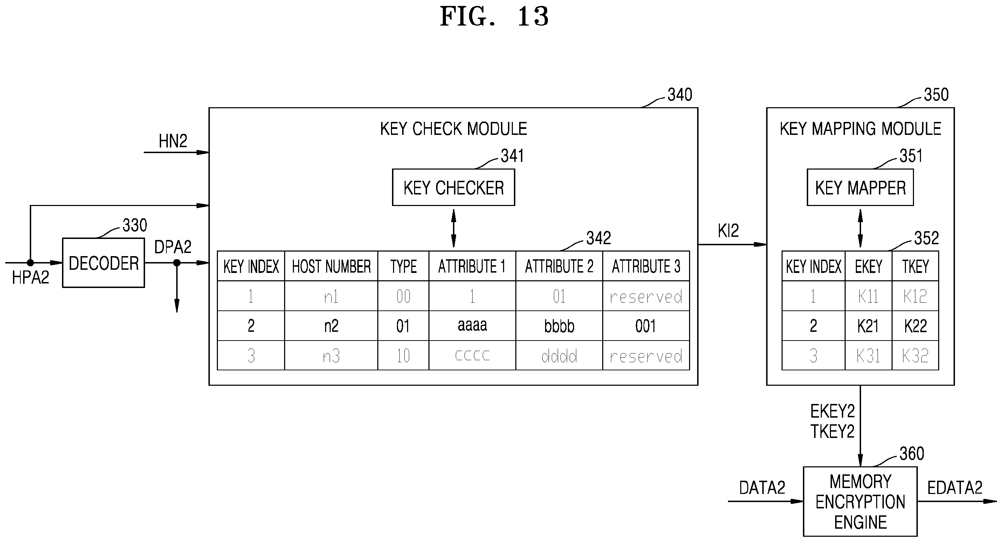

FIG. 13 is a diagram for describing an example of encrypting data by using range-based memory encryption.

Referring to FIG. 13, when the second device uses the range-based memory encryption, a write request provided by the second host device may include the second host physical address HPA2 and the second host data HN2.

The decoder 330 may decode the second host physical address HPA2 into the second device physical address DPA2.

The key check module 340 may receive the second device physical address DPA2, the second host data HN2, and the second host physical address HPA2. The key checker 341, after confirming the value of the second host data HN2, may search for a value (e.g., "2") of the second key index KI2 stored in the second entry of the key index table 342 by using values (e.g., "aaaa," "bbbb," "001") of the second host physical address HPA2, and provide the second key index KI2, which has been searched for, to the key mapping module 350.

The key mapper 351 may search for values of second keys (i.e., a second Ekey EKEY2 and a second Tkey TKEY2) (e.g., "K21" and "K22") in the key table 352 by using the value of the second key index KI2. The second keys (i.e., the second Ekey EKEY2 and the second Tkey TKEY2) returned by the key table 352 may be provided to the memory encryption engine 360.

The memory encryption engine 360 may encrypt the received second data DATA2, by using the second keys (i.e., the second Ekey KEY2 and the second Tkey TKEY2) and the encryption algorithm (e.g., AES-XTS). Second encrypted data EDATA2 may be provided to the memory controller 114 shown in FIG. 1.

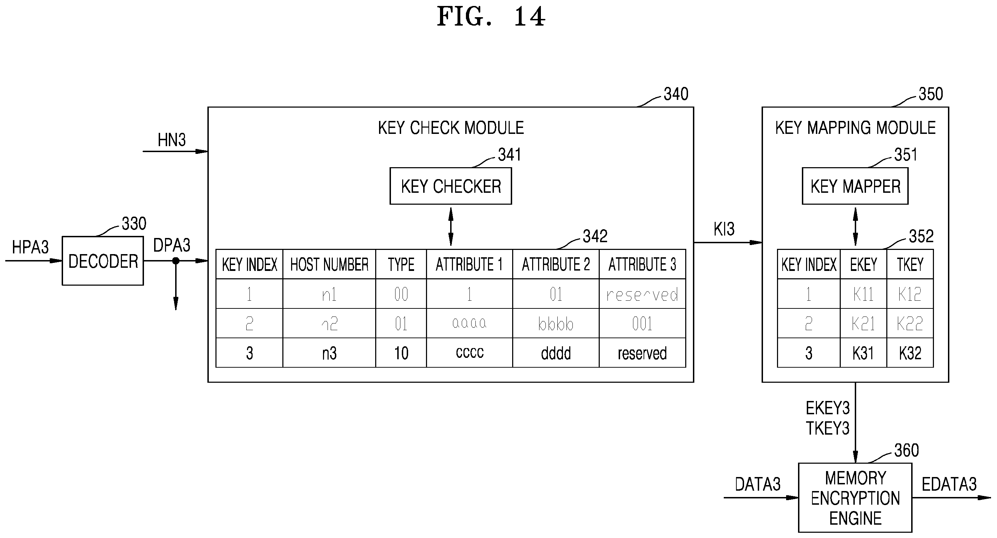

FIG. 14 is a diagram for describing an example of encrypting by using device physical address-based memory encryption.

Referring to FIG. 14, when the third host device uses the device physical address-based memory encryption, a write request provided by the third host device may include the third host physical address HPA3 and the third host data HN3 without memory encryption. In an example implementation, the third host physical address HPA3 may also be delivered to the key check module 340 through the host interface 111.

The decoder 330 may decode the third host physical address HPA3 into the third device physical address DPA3. The key checker 341 may search for a value (e.g., "3") of the third key index KI3 in the key index table 342 by using values (e.g., "cccc" and "dddd") of the third device physical address DPA3. The key mapper 351 may, in the key table 352, search for values (e.g., "K31" and "K32") of third keys (i.e., a third Ekey EKEY3 and a third Tkey TKEY3) corresponding to the value of the third key index KI3. The memory encryption engine 360 may encrypt third data DATA3 by using the third keys (i.e., the third Ekey EKEY3 and the third Tkey TKEY3) that have been set and the encryption algorithm (e.g., AES-XTS). The third device physical address DPA3 and third encrypted data EDATA3 may be provided to the memory controller 114 shown in FIG. 1.

FIG. 15 is a flowchart for describing an example of a method of providing decrypted data.

Referring to FIGS. 1 and 15, in S310, the CXL device 100 may receive a read request from the host 10. In some implementations, the read request may include a host physical address and host data. In an example implementation, the read request may further include CKID data.

In S320, the CXL device 100 may obtain at least one key corresponding to the host 10.

In S330, the CXL device 100 may read encrypted data stored in the CXL device 100. For example, the CXL controller 110 may provide a certain device physical address, which is mapped to a host physical address, and a read command to the volatile memory 120, and receive the encrypted data from the volatile memory 120.

In some implementations, S320 and S330 may be performed in parallel.

In S340, the CXL device 100 may decode the encrypted data, by using at least one key and the encryption algorithm.

In S350, the CXL device 100 may provide the decoded data to the host 10.

In some implementations, a series of processes of obtaining keys, in S320 to S340, is as described above with reference to FIGS. 12 to 14. Similarly to the descriptions given above with reference to FIGS. 12 to 14, a process of decoding the encrypted data may include a reverse-operation in a process of data encryption.

According to the implementations described above, the memory encryption may be supported even in a non-TSP environment, by generating and allocating a key used for the device physical address-based memory encryption. Accordingly, the security of the CXL device 100 may be enhanced.

According to the implementations described above, the memory encryption may be supported without being dependent on the host, even in a multi-host environment, a memory pooling environment, and a shared memory environment (e.g., LD-FAM and G-FAM) defined in the CXL standard.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a combination can in some cases be excised from the combination, and the combination may be directed to a subcombination or variation of a subcombination.

It would be obvious to one of ordinary skill that the structure of the present disclosure may be variously modified within the scope of the present disclosure. Considering the descriptions, when the modifications of the present disclosure within the following claims and the category of equivalents, it will be considered that the present disclosure encompasses modification of the present disclosure.

Example implementations have been disclosed in the accompanying drawings and the present specifications. Although the implementations have been described by using specific terms, this is only to provide descriptions of the present disclosure and is not to limit the meanings or the scope of the present disclosure written in the following claims. Therefore, it will be understood to one or ordinary skill that various implementations and other equivalent implementations may be made therefrom. Accordingly, the technical scope of the present disclosure will be defined by the following claims.

While the present disclosure has been particularly shown and described with reference to implementations thereof, it will be understood that various changes in form and details may be made therein without departing from the scope of the following claims.

## Claims

1. A Compute Express Link (CXL) device (100) comprising:
a volatile memory (120); and
a CXL controller (110) configured to communicate with a plurality of host devices (10) and the volatile memory (120), wherein the CXL controller (110) is configured to
receive first host data (HN1) and a first host physical address (HPA1) from a first host device (10) among the plurality of host devices (10),
convert the first host physical address (HPA1) into a first device physical address (DPA1) for the volatile memory (120),
obtain a first key index (KI1) based on at least one key index table (342), the first host data (HN1), and the first device physical address (DPA1), wherein the first key index (KI1) is set for the first host device (10),
obtain at least one first key (KEY1) based on a key table (352) and the first key index (KI1), wherein the at least one first key (KEY1) is set for the first host device (10), and the key table (352) is for each key index of a plurality of key indices in the at least one key index table (342), and
perform an encryption operation based on the at least one first key (KEY1) and an encryption algorithm.

2. The CXL device (100) of claim 1, wherein the CXL controller (110) is configured to decode the first host physical address (HPA1) into the first device physical address (DPA1) based on an address mapping table (331).

3. The CXL device (100) of claim 1 or claim 2, wherein the CXL controller (100) is configured to store, as the at least one key index table (342), a single key index table (400), and
wherein the single key index table (400) comprises a first plurality of values of the plurality of key indices, a second plurality of values of a plurality of host numbers, a third plurality of values of a plurality of memory encryption types, and a fourth plurality of values of a plurality of attributes of the first host device (10).

4. The CXL device (100) of claim 1 or claim 2, wherein
the CXL controller (110) is configured to store a plurality of key index tables (510, 520, 530, 540) respectively corresponding to the plurality of host devices (10), and
each key index table of the plurality of key index tables (510, 520, 530, 540) comprises a first value of a corresponding key index among the plurality of key indices, a second value of a corresponding type among a plurality of memory encryption types, and a plurality of values of a plurality of attributes for a corresponding host device.

5. The CXL device (100) of any preceding claim, wherein the key table (352) comprises, for each key index of the plurality of key indices, a first value of a data encryption key (Ekey) and a second value of a tweak key (Tkey), the tweak key (Tkey) being defined in an Advanced Encryption Standard (AES) encryption algorithm standard.

6. The CXL device (100) of any preceding claim, wherein the CXL controller (110) is configured to
receive, from a second host device among the plurality of host devices, Context Key Identifier (CKID) data, second host data (HN2), and a second host physical address (HPA2),
obtain a second key index (KI2) based on the at least one key index table (342), the CKID data, and the second host data, wherein the second key index is set for the second host device,
obtain at least one second key (KEY2) based on the second key index (KI2) and the key table (352), wherein the at least one second key (KEY2) is set for the second host device, and
execute CKID-based memory encryption based on the at least one second key (KEY2) and the encryption algorithm, wherein the CKID-based memory encryption is defined in the CXL standard.

7. The CXL device (100) of any preceding claim, wherein the CXL controller (110) is configured to
receive, from a third host device among the plurality of host devices (10), third host data (HN3) and a third host physical address (HPA3) by using Trusted Execution Environment (TEE) Security Protocol (TSP) defined in the CXL standard,
obtain a third key index (KI3) based on the at least one key index table (342), the third host physical address (HPA3), and the third host data (HN3), wherein the third key index (KI3) is set for the third host device,
obtain at least one third key (KEY3) based on the third key index (KI3) and the key table (352), wherein the at least one third key (KEY3) is set for the third host device, and
execute range-based memory encryption based on the at least one third key (KEY3) and the encryption algorithm, wherein the range-based memory encryption is defined in the CXL standard.

8. The CXL device (100) of any preceding claim, wherein the CXL controller (110) is configured to
receive, from a fourth host device among the plurality of host devices (10), fourth host data and a fourth physical address,
allocate a fourth device physical address corresponding to a fourth host physical address,
generate at least one fourth key corresponding to the fourth device physical address,
store, in the at least one key index table (342), a fourth key index, the fourth host data, and the fourth device physical address that correspond to the at least one fourth key, and
store, in the key table (352), the fourth key index and the at least one fourth key.

9. The CXL device (100) of any preceding claim, wherein the CXL controller (110) is configured to, using the at least one first key (KEY1) and the encryption algorithm, encrypt first data (DATA1) provided from the first host device or decrypt first encrypted data (EDATA1) provided from the volatile memory (120).

10. An operating method of a Compute Express Link (CXL) device comprising a volatile memory (120) and a CXL controller (110), the operating method comprising:
receiving, from a first host device (10) among a plurality of host devices (10), first host data (HN1) and a first host physical address (HPA1);
allocating a first device physical address (DPA1) corresponding to the first host physical address (HPA1);
generating at least one key (KEY1) corresponding to the first device physical address (DPA1);
storing, in at least one key index table (342), a first key index (KI1), the first host data (HN1), and the first device physical address (DPA1) that correspond to at least one first key (KEY1); and
storing, in a key table (352), the first key index (KI1) and the at least one first key (KEY1), the key table (352) being for at least one key corresponding to the first key index (KI1).

11. The operating method of claim 10, wherein the at least one key index table (342) is a single key index table (342) comprising a first plurality of values of a plurality of key indices, a second plurality of values of host numbers, a third plurality of a plurality of memory encryption types, and a fourth plurality of values of a plurality of attributes for the plurality of host devices (10).

12. The operating method of claim 10, wherein
the at least one key index table (342) comprises a plurality of key index tables (510, 520, 530, 540) corresponding to the plurality of host devices (10), and
each key index table (510, 520, 530, 540) of the plurality of key index tables comprises a first value of a corresponding key index, a second value of a corresponding type among a plurality of memory encryption types, and a plurality of values of a plurality of attributes for a corresponding host device (10).

13. The operating method of any of claims 10-12, wherein the key table (352) comprises, for each key index of a plurality of key indices, a first value of a data encryption key (Ekey) and a second value of a tweak key (Tkey), the tweak key (Tkey) being defined in an Advanced Encryption Standard (AES) encryption algorithm standard.

14. The operating method of any of claims 10-13, comprising:
setting at least one second key (KEY2) of a second host device (10) among the plurality of host devices (10), wherein setting the at least one second key (KEY2) of the second host device (10) comprises:
receiving, from a second host device (10), second host data (HN2), second key data (KDATA2) about a key to be used by the second host device (10), and second attribute data about a plurality of attributes of the second host device (10);
generating the at least one second key (KEY2) and a second key index (KI2) based on the second key data (KDATA2), the second key index (KI2) corresponding to the at least one second key (KEY2);
storing, in the at least one key index table (342), the second key index (KI2), the second host data (HN2), and the second attribute data; and
storing, in the key table (352), the second key index (KI2) and the at least one second key (KEY2).

15. The operating method of any of claims 10-14, wherein
the allocating of the first device physical address (DPA1) corresponding to the first host physical address (HPA1) comprises decoding the first host physical address (HPA1) into the first device physical address (DPA1), based on an address mapping table (331).
